(19) Europäisches Patentamt
European Patent Office
Office européen des brevets

(11) **EP 2 824 046 A1**

(12) **EUROPÄISCHE PATENTANMELDUNG**

(43) Veröffentlichungstag:
**14.01.2015 Patentblatt 2015/03**

(51) Int Cl.:
***B65G 1/02*** *(2006.01)* ***B65G 1/04*** *(2006.01)*

(21) Anmeldenummer: **14176964.6**

(22) Anmeldetag: **14.07.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.07.2013 DE 102013107438**

(71) Anmelder: **WITRON Logistik + Informatik GmbH 92711 Parkstein (DE)**

(72) Erfinder: **Winkler, Walter 92711 Parkstein (DE)**

(74) Vertreter: **Lang, Christian LangPatent Anwaltskanzlei IP Law Firm Rosenheimer Strasse 139 81671 München (DE)**

(54) **Regallager mit lösbaren vertikalen Lagerfachteilern zur variable Nutzung von Ladungsträgern unterschiedlicher Größe**

(57) Die vorliegende Erfindung betrifft ein Regallager mit mindestens einem Regal (1) mit einer Vielzahl von Lagerfächern (4), die durch eine Vielzahl von vertikalen Stützen (2) und horizontalen Trägern (3) gebildet werden, wobei mehrere Stützen nebeneinander und mehrere Träger übereinander angeordnet sind, um das Regal zu bilden und zwischen sich die Lagerfächer mit einem Lagerfachraum einzuschließen, der eine Höhe zwischen horizontalen Trägern und eine Breite und/oder Tiefe zwischen vertikalen Stützen aufweist, wobei die Lagerfächer einen Lagerfachboden (5) zur Lagerung von ersten Ladungsträgern (7) und an den vertikalen Stützen horizontal sich erstreckende Auflageflächen (6) zur Lagerung von zweiten Ladungsträgern (9) aufweisen, wobei die Auflageflächen sich nur in einem Teil des Lagerfachraums erstrecken, so dass in einem Lagerfach variabel mindestens ein auf einem ersten Ladungsträger angeordnetes Großgebinde (8), das sich über den überwiegenden Teil der Höhe des Lagerfachraums erstreckt, oder ein erster Ladungsträger und/oder ein oder mehrere zweite Ladungsträger gelagert werden können, wobei das Regal weiterhin vertikale Lagerfachteiler (11) und an den horizontalen Trägern Aufnahmen (13) für die Lagerfachteiler aufweist, die so ausgebildet sind, dass die Lagerfachteiler lösbar an den horizontalen Trägern angeordnet werden können, wobei die Lagerfachteiler mit den Auflageflächen korrespondierende, horizontal sich erstreckende Stützflächen (12) zur Lagerung dritter Ladungsträger (14) aufweisen.

Fig. 1

**Beschreibung**

GEBIET DER ERFINDUNG

Die vorliegende Erfindung betrifft ein Regallager zur Lagerung verschiedenster Gegenstände, wie sie beispielsweise in einem Versand- oder Logistikzentrum oder einer Kommissionieranlage vorkommen.

STAND DER TECHNIK

In vielen Bereichen des Handels, wie beispielsweise im Einzelhandel oder Versandhandel, müssen eine Vielzahl von verschiedenen Artikeln gelagert werden und diese Artikel müssen in unterschiedlich großen Mengen ausgeliefert werden, sodass für die Lagerung und Handhabung der Artikel ein großer Aufwand entstehen kann.

So werden beispielsweise in Versandzentren von Einzelhandelsketten Waren in großen Packgrößen von den Herstellern angeliefert, dort zwischengelagert und in kleinen Packgrößen bis hin zu einzelnen Waren an die Einzelhandelsgeschäfte ausgeliefert, um dort verkauft zu werden. In ähnlicher Weise werden bei Versandhändlern große Mengen bestimmter Waren eingekauft, zwischengelagert und entsprechend dem Abverkauf in kleineren Packungsgrößen oder als Einzelwaren versandt. Sowohl beim Versand der Waren an die Einzelhandelsgeschäfte als auch bei der Bearbeitung von Bestellungen im Versandhandel müssen die Waren kommissioniert, also für die einzelnen Aufträge entsprechend zusammengestellt werden. Hierbei müssen die Waren aus dem Lager entnommen und die Restbestände wieder in das Lager eingelagert werden. Eine effektive und kostengünstige Handhabung der Waren in derartigen Versand - und Logistikzentren setzt deshalb eine geeignete Lagerung der Waren voraus.

Üblicherweise werden von verschiedenen Waren unterschiedliche Mengen in bestimmten Zeiträumen vertrieben, sodass einerseits eine ausreichend große, aber auch eine nicht größer als erforderliche Lagerhalterung notwendig ist, um einen effizienten Vertrieb zu gewährleisten. Entsprechend wird für verschiedene Waren und/oder zu verschiedenen Zeitpunkten für die gleiche Ware eine unterschiedlich große Lagerkapazität erforderlich. Darüber hinaus sollen die Waren und Artikel jedoch möglichst effektiv aus einem Lager entnommen und in dieses wieder eingelagert werden können, sodass eine möglichst automatisierte bzw. maschinengerechte Handhabung erforderlich ist.

Da die Lagerhaltung zudem wenig Kosten verursachen soll, besteht Bedarf an einfach, aber flexibel aufgebauten Regallagern, die zudem eine effiziente Ein- und Auslagerung ermöglichen.

Eine Lösung für ein flexibel nutzbares Regallager ist in der EP 1 471 015 B1 beschrieben, wobei dieses Regallager die gleichzeitige Lagerung von unterschiedlichen Ladungsträgern, wie beispielsweise Paletten und Tablaren in den Lagerfächern des Regals ermöglicht.

OFFENBARUNG DER ERFINDUNG

AUFGABE DER ERFINDUNG

Ausgehend von dem im Stand der Technik bekannten flexibel nutzbaren Regallager, ist es Aufgabe der vorliegenden Erfindung, eine noch variablere Nutzung eines Regallagers zu ermöglichen, welches gleichzeitig eine effiziente und kostengünstige Herstellung sowie Bedienung eines entsprechenden Regallagers bei der Ein- und Auslagerung der zu lagernden Waren ermöglicht.

TECHNISCHE LÖSUNG

Diese Aufgabe wird gelöst durch ein Regallager mit den Merkmalen des Anspruchs 1. Vorteilhafte Ausgestaltungen sind Gegenstand der abhängigen Ansprüche.

Zur Klarstellung wird zunächst definiert, dass, wenn nachfolgend von vertikal oder horizontal die Rede ist, die entsprechende Richtung in Bezug auf die Erdoberfläche gemeint ist, jedoch mit der Einschränkung, dass geringfügige Abweichungen von der vertikalen oder horizontalen Richtung ebenfalls mit umfasst sein sollen.

Wenn im nachfolgenden Text von oben bzw. unten bzw. einer oberen oder unteren Anordnung die Rede ist, so bezieht sich dies ebenfalls auf die vertikale Richtung.

Weiterhin wird bei der vorliegenden Beschreibung die Breite als die Richtung definiert, die sich entlang einer Lagergasse erstreckt, die sich entlang eines Regals eines Regallagers erstreckt, um von der Lagergasse aus die verschiedenen Regalfächer des Regals be- und entladen zu können.

Die Höhe wird für die vorliegende Beschreibung als die Dimension in vertikaler Richtung definiert, während die Tiefe des Regals bzw. eines Regalfachs als die horizontale Richtung quer zu einer Lagergasse bestimmt wird.

Die vorliegende Erfindung schlägt ausgehend von der EP 1 471 015 B1 vor, zusätzlich vertikale Lagerfachteiler vorzusehen, um die Variabilität der Nutzung des Regallagers zu erhöhen.

Ein Regal eines erfindungsgemäßen Regallagers umfasst eine Vielzahl von vertikalen Stützen und horizontalen Trägern, die quer zueinander ein Fachwerk oder Gerüst zur Bildung der Regalgrundstruktur bilden. Die vertikalen Stützen und die horizontalen Träger bilden Lagerfächer, die einen Lagerfachraum definieren. Jedes Lagerfach weist einen Boden auf, der zur Lagerung eines ersten Ladungsträgers, z.B. einer Palette dient, wobei der Boden keine flächige Auflagefläche aufweisen muss, sondern lediglich durch die horizontalen Träger gebildet sein kann. Auf dem ersten Ladungsträger können eine Vielzahl von Waren oder großformatige Waren (Großgebinde) gelagert sein, die einen Großteil des Lagerfachraums einnehmen.

In den Lagerfächern sind an den vertikalen Stützen Auflageflächen angeordnet, die eine Lagerung von zweiten Ladungsträgern, wie z.B. Tablaren, ermöglichen. Die zweiten Ladungsträger bzw. die darauf angeordneten Waren weisen zumindest in Richtung der Höhe kleinere Dimensionen als die ersten Ladungsträger und ihre Waren auf, so dass mehrere zweite Ladungsträger mit Waren übereinander in einem Lagerfach angeordnet werden können.

Die zusätzlich vorgesehenen Lagerfachteiler, die über Aufnahmen für die Lagerfachteiler an den horizontalen Trägern an diesen lösbar und/oder in Teilen der Lagerfächer fest angeordnet werden können, bieten zusätzlich die Möglichkeit, die Regalfächer in der Breitenrichtung zu unterteilen, um dritte Ladungsträger, die in einer Dimension kleiner dimensioniert sind als die zweiten Ladungsträger aufnehmen zu können. Dazu weisen die Lagerfachteiler gemäß der vorliegenden Erfindung sich horizontal erstreckende Stützflächen auf, wenn die Lagerfachteiler in den entsprechenden Lagerfächern angeordnet sind, wobei die horizontal sich erstreckenden Stützflächen mit den horizontal sich erstreckenden Aufnahmeflächen der vertikalen Stützen des Regals ergänzen, um eine Lagerung dritter, anders dimensionierter Ladungsträgern zusätzlich zu dem ersten Ladungsträger auf einem Lagerfachboden und den zweiten Ladungsträgern auf den Auflageflächen der vertikalen Stützen zu ermöglichen. Durch die lösbare Anbringung der Lagerfachteiler an den horizontalen Trägern des Regalgrundgerüsts und der damit verbundenen Schaffung eines weiteren Lagerbereichs für eine zusätzliche Art von Ladungsträgern ist eine noch flexiblere und variablere Nutzung des Regals als im Stand der Technik möglich.

Das erfindungsgemäße Regallager kann somit in variabler Weise für mindestens drei unterschiedliche Ladungsträger genutzt werden und zwar zum einen erste Ladungsträger, die große Waren oder eine große Anzahl von Waren (Großgebinde) tragen, wie beispielsweise Paletten, zweite Ladungsträger, die kleinere Waren oder eine kleinere Anzahl von Waren tragen, wie beispielsweise Tablare, und dritte Ladungsträger, die noch kleiner dimensioniert sein können und die beispielsweise als Behälter zur Aufnahme von Kleinstwaren ausgebildet sind. Die Dimensionen der Lagerfächer und der Ladungsträger können entsprechend aufeinander abgestimmt sein, sodass eine optimale Raumausnutzung des Lagerraums in den Lagerfächern ermöglicht wird.

So kann beispielsweise die Breite der Lagerfächer zwischen zwei vertikalen Stützen einer Dimension oder einem ganzzahligen Vielfachen einer Dimension des ersten Ladungsträgers zuzüglich der Dimension der Auflageflächen in dieser Richtung entsprechen, sodass ein vollbeladener erster Ladungsträger oder mehrere voll beladene Ladungsträger in einem Lagerfach nebeneinander angeordnet werden können, ohne dass sie mit den Auflageflächen der vertikalen Stützen kollidieren. Entsprechend kann die Breite eines Lagerfachs auch der Dimension eines zweiten Ladungsträgers, der auf den Auflageflächen gelagert wird zuzüglich eines Handhabungsspielraums für die Handhabung des zweiten Ladungsträgers entsprechen.

Je nachdem, ob in einem Lagerfach ein oder mehrere Lagerfachteiler angeordnet sind, definiert sich die eine maximale Dimension des dritten Ladungsträgers, der auf den Auflageflächen bzw. den Stützflächen der Lagerfachteiler gelagert werden soll, durch die Formel

$$B_{L3} = (B_{LF} - B_{RFT} * N_{RFT} - S) / (N_{RFT} + 1) \, ,$$

wobei $B_{LF}$ die Breite eines Lagerfachs entlang einer Regalgasse, $B_{RFT}$ die Breite eines in dem Regalfach angeordneten Regalfachteilers, S der erforderliche Handhabungsspielraum und $N_{RFT}$ die Anzahl der Regalfachteiler ist. Eine minimale Dimension des dritten Ladungsträgers ist durch den Abstand von Auflageflächen und Stützflächen zueinander gegeben.

Um eine weitere Flexibilisierung der Nutzung des Regallagers bzw. des Regals zu ermöglichen, können die Auflageflächen an den vertikalen Stützen und/oder die Stützflächen an den Lagerfachteilern lösbar angeordnet sein, und es können insbesondere eine Vielzahl von Anordnungsmöglichkeiten für die Auflageflächen und Stützflächen beispielsweise in Form eines vorgegebenen Rasters vorgesehen sein, um die Anordnung der Auflageflächen und/oder Stützflächen an die Höhen der mit dem zweiten Ladungsträger oder dem dritten Ladungsträger zu lagernden Waren bzw. an die Höhen der entsprechenden Ladungsträger anzupassen.

Die Lagerfachteiler können schwächer dimensioniert sein als die vertikalen Stützen des Regals, da die Belastung der Lagerfachteiler durch die Lagerung klein dimensionierter Waren geringer ist. So können die vertikalen Stützen so dimensioniert sein, dass an einem Lagerfachboden mindestens 500 kg, vorzugsweise 1.000 kg gelagert werden können, während die Lagerfachteiler so dimensioniert sein können, dass pro Stützfläche maximal 200 kg, insbesondere maximal 100 kg Lagerlast getragen werden müssen.

Insbesondere kann das Regalgrundgerüst aus vertikalen Stützen und horizontalen Trägern so dimensioniert sein, dass eine Gebäudehülle anbaubar ist bzw. an ein oder mehrere Regale eine Gebäudehülle angebaut ist, um so die sogenannte Silo-Bauweise zu verwirklichen. Damit kann die Tragstruktur eines Lagergebäudes im Wesentlichen durch ein oder mehrere Regale gebildet werden, was zu einem einfachen Aufbau des gesamten Regallagers beiträgt. Durch das Vorsehen der schwächer dimensionierten Lagerfachteiler kann gleichwohl eine flexible und variable Nutzung des Regals ermöglicht werden, sodass auch für die Lagerung von klein dimensionierten Waren bzw. die Behälterlagerung durch ein Regallager in Silo-Bauweise realisiert werden kann.

Entlang eines Regals des erfindungsgemäßen Regallagers kann mindestens eine Lagergasse zur Ein- und Auslagerung der Waren vorgesehen sein, in welcher voll- oder halbautomatisierte Regalfahrzeuge angeordnet sind und/oder manuell betätigbare Handhabungsgeräte, wie Hubwagen oder Gabelstapler, verfahrbar sind. Insbesondere kann eine Kombination von manuell betätigbaren Handhabungsgeräten und voll- oder halbautomatisierten Regalfahrzeugen vorgesehen werden, wobei insbesondere auch Regalfächer sowohl von voll- oder halbautomatisierten Regalfahrzeugen, als auch von manuell betätigbaren Handhabungsgeräten, wie Gabelstaplern be- und entladen werden können, was die flexible Nutzung des Regals weiter erhöht.

Nach einer Ausführungsform kann in einer Lagergasse ein Fahrweg für voll- und/oder halbautomatisierte Regalfahrzeuge oberhalb eines Fahrwegs für manuell betätigbare Handhabungsgeräte vorgesehen sein. Beispielsweise kann bei einem Regal aus mehreren, übereinander angeordneten Ebenen von Lagerfächern in einer mittleren Ebene einen Fahrweg für ein voll- oder halb automatisiertes Regalfahrzeug vorgesehen sein, so dass die oberhalb des Fahrwegs für das voll- oder halbautomatisierte Regalfahrzeug gelegenen Regalfächer voll- oder halbautomatische be- und entladen werden können, während die unterhalb des Fahrwegs für das voll- oder halbautomatisierte Regalfahrzeug gelegenen Lagerfächer durch manuell betätigte Handhabungsgeräte bedient werden können.

Unter vollautomatischen Regalfahrzeugen werden Regalfahrzeuge verstanden, die vollautomatisiert die einzelnen Regalfächer anfahren und die darin befindlichen Waren bzw. Ladungsträger automatisiert aus dem Regalfach entnehmen oder das Regalfach entsprechend damit bestücken bzw. die Waren oder Ladungsträger an dafür vorgesehenen Übergabepunkten an weitere Handhabungsmittel automatisiert übergeben. Unter halbautomatischen Regalfahrzeugen werden diejenigen Regalfahrzeuge verstanden, die zwar vorgegeben und automatisiert an bestimmte Regalfächer gefahren werden, wobei jedoch ein Bediener auf dem Regalfahrzeug mitfährt und die Entnahme bzw. Einlagerung von Waren aus- oder in das Regalfach manuell vornimmt. Entsprechend können auch andere halbautomatische Bediengeräte vorgesehen sein, bei denen ein Teil der Betätigung manuell und nicht automatisiert erfolgt.

KURZBESCHREIBUNG DER FIGUREN

Die beigefügten Zeichnungen zeigen in rein schematischer Weise in

Fig. 1     eine Seitenansicht eines Regals eines erfindungsgemäßen Regallagers; und in
Fig.2     eine Schnittansicht durch ein Regallager entlang einer Lagergasse.

AUSFÜHRUNGSBEISPIELE

Weitere Vorteile, Kennzeichen und Merkmale der vorliegenden Erfindung werden bei der nachfolgenden, detaillierten Beschreibung der Ausführungsbeispiele anhand der beigefügten Zeichnungen deutlich. Allerdings ist die Erfindung nicht auf diese Ausführungsbeispiele beschränkt.

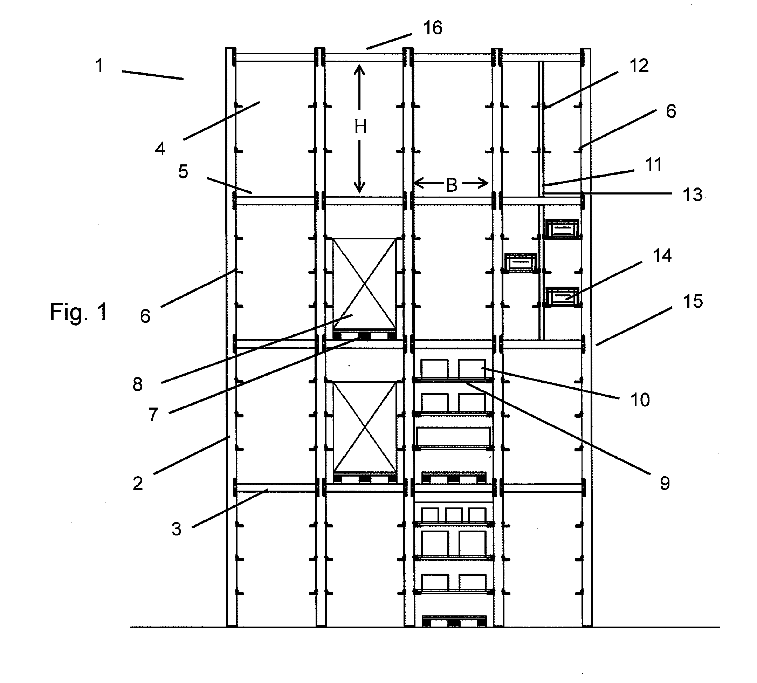

Die Figur 1 zeigt eine Ansicht eines erfindungsgemäßen Regals 1, welches aus einer Vielzahl von vertikalen Stützen 2 und horizontalen Trägern 3 aufgebaut ist. Hierbei können die vertikalen Stützen 2 und die horizontalen Träger 3 in Stangenform ausgebildet sein, sodass sich ein rechtswinkliges Fachwerk aus quer zueinander angeordneten vertikalen Stützen 2 und horizontalen Trägern 3 ergibt. Allerdings könnten die Stützen 2 auch als Wandbereiche bzw. die horizontalen Träger als Boden- oder Deckenbereiche in Form von flächigen Platten oder dergleichen ausgebildet sein.

Durch die vertikalen Stützen 2 und die horizontalen Träger 3 werden Lagerfächer 4 ausgebildet, die einen Lagerfachraum definieren. Der Lagerfachraum eines Lagerfachs 4 ergibt sich durch die Höhe H, die Breite B sowie die Tiefe T eines Lagerfachs 4, welche bei der Darstellung der Figur 1 senkrecht zur Bildebene verläuft.

Jedes Lagerfach 4 weist einen Boden 5 auf, der zur Lagerung von Paletten 7 dient. Der Boden 5 kann hierbei wiederum als flächige Platte oder als Bodenrahmen ausgebildet sein, bei dem die Palette 7 lediglich auf zwei beabstandeten horizontalen Trägern 3 gelagert ist.

Die Palette 7 dient zur Aufnahme und Lagerung von groß dimensionierten und/oder einer großen Anzahl von Waren 8, die sich über einen großen Bereich der Höhe H eines Lagerfachs 4, insbesondere über mindestens die Hälfte der Höhe H eines Lagerfachs oder mindestens drei Viertel der Höhe H eines Lagerfachs 4 erstrecken.

In einem Lagerfach 4 können hintereinander in Richtung der Tiefe T mehrere Paletten 7, insbesondere 2 Paletten, angeordnet werden, und das Lagerfach 4 kann auch so dimensioniert sein, dass mehrere Paletten 7 nebeneinander entlang der Breite B eines Lagerfachs 4 angeordnet werden können.

An den vertikalen Stützen 2 sind zur Unterteilung des Lagerraums 4 entlang der vertikalen Richtung pro Lagerfach 4 und vertikale Stütze 2 ein oder mehrere Auflageflächen 6 in Form von Winkelprofilen angeordnet, die zur Lagerung von Tablaren 9 dienen, auf denen kleinere Wareneinheiten 10 oder eine geringere Anzahl von Waren gelagert werden können. In dem gezeigten Ausführungsbeispiel der Figur 1 weisen die Lagerfächer 4 pro vertikaler Stütze 2 bzw. 3 Auflageflächen 6 auf, sodass zwei oder drei Tablare 9 auf diesen gelagert werden können. Zusätzlich kann ein weiteres Tablar 9 auf dem Boden 5 eines Lagerfachs 4 gelagert werden, oder der Boden 5 eines Lagerfachs 4 kann zur Lagerung einer leeren Palette 7 dienen.

Das erfindungsgemäße Regal 1 weist zudem Lagerfachteiler 11 auf, die über Aufnahmen 13 der horizontalen Träger in den Lagerfächern 4 angeordnet sein können. Die Lagerfachteiler 11 können lösbar über die Aufnahmen 13 mit den horizontalen Trägern 3 verbunden werden, sodass die Lagerfachteiler 11 flexibel in die entsprechenden Lagerfächer 4 eingesetzt und wieder entfernt werden können.

An den Lagerfachteilern 11, die wiederum als Stäbe oder plattenförmig ausgebildet sein können, sind Stützflächen 12 in Form von Winkelprofilen angeordnet, die bei einer Anordnung der Lagerfachteiler 11 in einem Lagerfach 4 mit den Auflageflächen 6 der vertikalen Stützen 2 korrespondieren, um eine Lagerungsmöglichkeit für Behälter 14 zu schaffen.

Sowohl die Stützflächen 12, als auch die Auflageflächen 6 können entsprechend abnehmbar an den Lagerfachteilern 11 bzw. den vertikalen Stützen 2 angeordnet sein. Insbesondere können die vertikalen Stützen 2 und/oder die Lagerfachteiler 11 eine Vielzahl von Anordnungsmöglichkeiten für die Stützflächen 12 bzw. die Auflageflächen 6, beispielsweise in Form eines gleichmäßigen Rasters besitzen, sodass die Anordnung der Auflageflächen 6 bzw. der Stützflächen 12 gemäß dem Raster schrittweise in der Höhe verstellt werden kann, um die Lagerungsmöglichkeit für die Tablare 9 und die darauf befindlichen Wareneinheiten 10 bzw. die Behälter 14 entsprechenden unterschiedlichen Höhenbedürfnisse anpassen zu können.

Da die Tiefe T des Regals 1 so ausgebildet ist, dass es mehrere Paletten 7, insbesondere zwei Paletten 7 hintereinander aufnehmen kann, können unter Umständen auch mehrere Tablare 9 und mehrere Behälter 14 hintereinander entlang der Tiefenrichtung des Regals 1 angeordnet werden.

Die Dimensionierung der vertikalen Stützen 2 und der horizontalen Träger 3 ist so ausgerichtet, dass das Grundgerüst aus vertikalen Stützen 2 und horizontalen Trägern 3 eine sogenannte Silo-Bauweise ermöglicht, nämlich dass das Grundgerüst als Träger für eine Gebäudehülle dient, so dass im Bereich der Seitenwand 15 und der Oberseite 16 des Regals entsprechende Wand-und Dachverkleidungen angeordnet werden können, sodass das Regal 1 die tragende Grundstruktur für die Gebäudestruktur bildet.

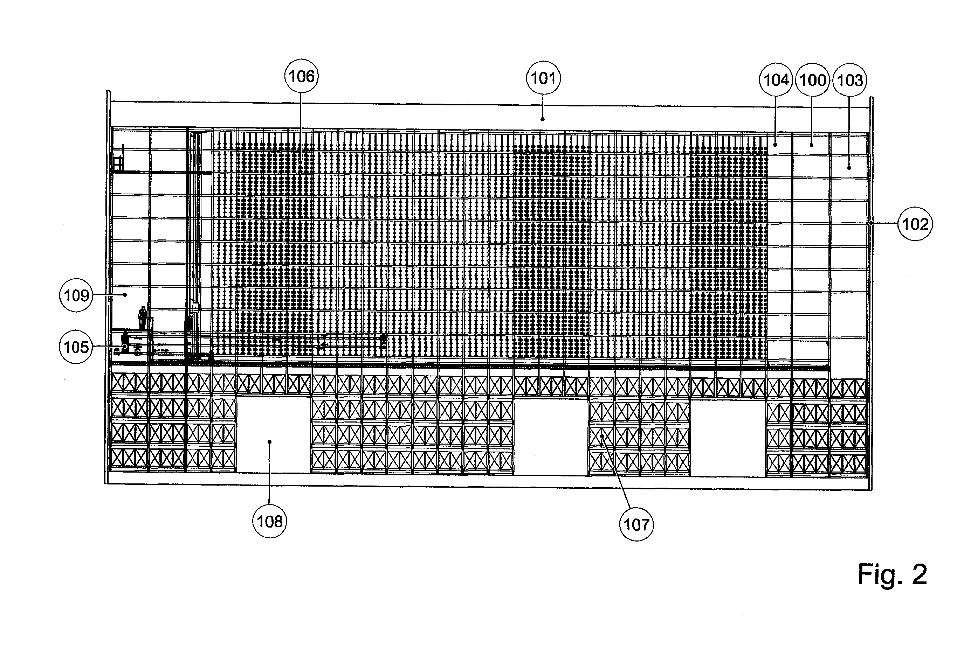

Die Figur 2 zeigt in einem Schnitt entlang einer Regalgasse eine weitere Ausführungsform eines erfindungsgemäßen Regallagers mit einem Regal 100, an welchem eine Dachkonstruktion 101 und Seitenwandverkleidungen 102 zur Bildung eines Lagergehäuses angeordnet sind.

Wie sich aus der Figur 2 ergibt, können die Lagerfächer 104 und 103 des Regals 100 unterschiedlich groß dimensioniert sein, sodass, wie im unteren Bereich des Regals 100 zu erkennen ist, Palettenlagerfächer 107 gegeben sind, die zwei Paletten nebeneinander entlang der Breite des Palettenlagerfachs 107 aufnehmen können, während andere Lagerfächer entsprechend der Größe des Lagerfachs 103 drei Paletten nebeneinander entlang der Breite des Lagerfachs aufnehmen kann.

Bei dem Regal 100 sind in einem unteren Bereich des über die Höhe aus mehreren Ebenen bestehenden Regals 100 Palettenlagerfächer 107 für Paletten und in einem oberen Bereich Behälterlagerfächer 106 für die Lagerung von Behältern vorgesehen, wobei in einem Behälterlagerfach 106 mehrere Regalfachteiler angeordnet sind.

In der dem Regal 100 zugehörigen Regalgasse ist ein Regalfahrzeug 105 angeordnet, welches sich entlang einer Schienenanordnung in einer mittleren Ebene des Regals 100 entlang der Regalgasse an den Regalfächern entlang bewegen kann und über einen Hubmast jedes Regalfach oberhalb der Schienenanordnung bedienen kann. Das Regal 100 ist im unteren Bereich für die Lagerung von Paletten ausgerichtet, wobei die Nutzung der einzelnen Regalfächer flexibel verändert werden kann, wenn der Bedarf an Stauraum für die Behälterlagerung und/oder die Palettenlagerung sich verändert. Entsprechend können dann durch Herausnahme der Regalfachteiler aus den Behälterlagerfächern 106 die Behälterlagerfächer 106 zu Palettenlagerfächern 107 gemacht werden und umgekehrt.

Die Figur 2 zeigt darüber hinaus, dass die Grundstruktur des Regals 100 mit vertikalen Stützen und horizontalen Trägern, die auch die Grundstruktur für das Lagergebäude bildet, mit Verkehrsbereichen, wie beispielsweise Querpassagen 108 für Gabelstapler und dergleichen oder Inspektionsgänge 109 für Bedienpersonal, aufweisen kann, sodass ein entsprechendes Lagergebäude sehr variabel und flexibel genutzt werden kann.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Art und Weise möglich sind, dass einzelne Merkmale weggelassen oder andersartige Kombinationen der Merkmale verwirklicht werden, solange der Schutzbereich der beigefügten Ansprüche nicht verlassen wird. Die vorliegende Offenbarung schließt sämtliche Kombinationen der vorgestellten Einzelmerkmale mit ein.

**Patentansprüche**

1. Regallager mit mindestens einem Regal (1,100) mit einer Vielzahl von Lagerfächern (4,103,104,106,107), die durch eine Vielzahl von vertikalen Stützen (2) und horizontalen Trägern (3) gebildet werden, wobei mehrere Stützen nebeneinander und mehrere Träger übereinander angeordnet sind, um das Regal zu bilden und zwischen sich die Lagerfächer mit einem Lagerfachraum einzuschließen, der eine Höhe zwischen horizontalen Trägern und eine Breite und/oder Tiefe zwischen vertikalen Stützen aufweist, wobei die Lagerfächer einen Lagerfachboden (5) zur Lagerung von ersten Ladungsträgern (7) und an den vertikalen Stützen horizontal sich erstreckende Auflageflächen (6) zur Lagerung von zweiten Ladungsträgern (9) aufweisen, wobei die Auflageflächen sich nur in einem Teil des Lagerfachraums erstrecken, so dass in einem Lagerfach variabel mindestens ein auf einem ersten Ladungsträger angeordnetes Großgebinde (8), das sich über den überwiegenden Teil der Höhe des Lagerfachraums erstreckt, oder ein erster Ladungsträger und/oder ein oder mehrere zweite Ladungsträger gelagert werden können,
**dadurch gekennzeichnet, dass**
das Regal weiterhin vertikale Lagerfachteiler (11) und an den horizontalen Trägern Aufnahmen (13) für die Lagerfachteiler aufweist, die so ausgebildet sind, dass die Lagerfachteiler fest und/oder lösbar an den horizontalen Trägern angeordnet werden können, wobei die Lagerfachteiler mit den Auflageflächen korrespondierende, horizontal sich erstreckende Stützflächen (12) zur Lagerung dritter Ladungsträger (14) aufweisen.

2. Regallager nach Anspruch 1,
**dadurch gekennzeichnet, dass**
das Regallager mindestens eine Lagergasse entlang einem Regal aufweist, entlang der zur Bestückung und Entleerung der Lagerfächer voll - oder halbautomatisierte Regalfahrzeuge (105) angeordnet sind und/oder manuell betätigbare Handhabungsgeräte verfahrbar sind.

3. Regallager nach Anspruch 2,
**dadurch gekennzeichnet, dass**
das Regal Lagerfächer aufweist, die sowohl von entlang der Lagergasse installierten voll - oder halbautomatisierte Regalfahrzeugen als auch von manuell betätigbaren Handhabungsgeräten bestückt und entleert werden können, und/oder dass das Regal Lagerfächer aufweist, die entweder von entlang der Lagergasse installierten voll - oder halbautomatisierte Regalfahrzeugen oder von manuell betätigbaren Handhabungsgeräten bestückt und entleert werden können.

4. Regallager nach einem der vorhergehenden Ansprüche,
**dadurch gekennzeichnet, dass**
das Regal mehrere übereinander angeordnete Ebenen von Lagerfächern aufweist, wobei für einen Teil der Lagerfächer in oberen Ebenen mindestens ein voll - oder halbautomatisiertes Regalfahrzeug (105) angeordnet ist, wobei insbesondere im Bereich einer mittleren Ebene ein Fahrweg für das voll - oder halbautomatisierte Regalfahrzeug angeordnet ist.

5. Regallager nach einem der vorhergehenden Ansprüche,
**dadurch gekennzeichnet, dass**
eine, insbesondere jede vertikale Stütze (2) so dimensioniert ist, dass sie eine höhere Festigkeit als ein Lagerfachteiler (11) aufweist.

6. Regallager nach einem der vorhergehenden Ansprüche,
**dadurch gekennzeichnet, dass**
die vertikalen Stützen (2) so dimensioniert sind, dass auf einem Lagerfachboden mindestens 500 kg, vorzugsweise mindestens 1000 kg gelagert werden können, während die Lagerfachteiler so dimensioniert sind, dass pro Stützfläche maximal 200 kg, insbesondere maximal 100 kg Lagerlast getragen werden können.

7. Regallager nach einem der vorhergehenden Ansprüche,
**dadurch gekennzeichnet, dass**
die vertikalen Stützen (2) und horizontalen Träger (3) so ausgebildet sind, dass eine Gebäudehülle anbaubar ist.

8. Regallager nach einem der Ansprüche 1 bis 6,

**dadurch gekennzeichnet, dass**
an ein oder mehrere Regale eine Gebäudehülle angebaut ist.

9. Regallager nach einem der vorhergehenden Ansprüche,
**dadurch gekennzeichnet, dass**
die ersten Ladungsträger Paletten und/oder die zweiten Ladungsträger Tablare und/oder die dritten Ladungsträger
Behälter sind.

10. Regallager nach einem der vorhergehenden Ansprüche,
**dadurch gekennzeichnet, dass**
eine Breite der Lagerfächer entlang einer Lagergasse einer Dimension des ersten Ladungsträgers zuzüglich der
Erstreckung der Auflageflächen in dieser Richtung und eines Handhabungsspielraums entspricht sowie einer Dimension des zweiten Ladungsträgers und eines Handhabungsspielraums entspricht.

11. Regallager nach einem der vorhergehenden Ansprüche,
**dadurch gekennzeichnet, dass**
in einem Lagerfach ein oder mehrere Lagerfachteiler (11) angeordnet werden können.

12. Regallager nach einem der vorhergehenden Ansprüche,
**dadurch gekennzeichnet, dass**
eine Dimension des dritten Ladungsträgers $B_{L3}$ sich bestimmt durch

$$B_{L3} = (B_{LF} - B_{RFT} * N_{RFT} - S) / (N_{RFT} + 1),$$

wobei $B_{LF}$ die Breite eines Lagerfachs entlang einer Regalgasse, $B_{RFT}$ die Breite eines in dem Regalfach angeordneten Regalfachteilers, S der erforderliche Handhabungsspielraum und $N_{RFT}$ die Anzahl der Regalfachteiler ist.

13. Regallager nach einem der vorhergehenden Ansprüche,
**dadurch gekennzeichnet, dass**
die Auflageflächen (6) und/oder Stützflächen (12) lösbar an den vertikalen Stützen oder Lagerfachteilern angeordnet
sind.

Fig. 1

Fig. 2

Europäisches
Patentamt

European
Patent Office

Office européen
des brevets

**EUROPÄISCHER RECHERCHENBERICHT**

Nummer der Anmeldung

EP 14 17 6964

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H06 115640 A (DAIFUKU KK) 26. April 1994 (1994-04-26) * Zusammenfassung * * Abbildungen 1-4,6 * * Seite 2 - Seite 4 * ----- | 1-9,11, 13 | INV. B65G1/02 B65G1/04 |
| X | JP 2006 168854 A (JFE ENG KK) 29. Juni 2006 (2006-06-29) * Zusammenfassung * * Abbildungen 1,4 * ----- | 1,13 | |
| X | DE 27 16 632 A1 (DEXION GMBH) 19. Oktober 1978 (1978-10-19) * Zusammenfassung * * Abbildung 1 * ----- | 1 | |
| A | US 2004/197171 A1 (FREUDELSPERGER KARL [AT]) 7. Oktober 2004 (2004-10-07) * Zusammenfassung * * Abbildungen 3,9 * * Seite 1, Absatz 0004 - Seite 2, Absatz 0022 * ----- | 4 | |
| A,D | EP 1 471 015 B1 (WITRON LOGISTIK & INF GMBH [DE]) 27. Juni 2007 (2007-06-27) * Zusammenfassung * * Abbildung 1 * * Seite 2, Absatz 0001 - Seite 3, Absatz 0016; Abbildung 1 * ----- | 1-13 | RECHERCHIERTE SACHGEBIETE (IPC) B65G A47B E04B |
| A | EP 0 437 894 A1 (FATA AUTOMATION [IT]) 24. Juli 1991 (1991-07-24) * Zusammenfassung * * Abbildungen 1,4,6 * * Seite 2, Spalte 2, Absatz 11 - Seite 2, Spalte 2, Absatz 41 * ----- | 13 | |

Der vorliegende Recherchenbericht wurde für alle Patentansprüche erstellt

| Recherchenort | Abschlußdatum der Recherche | Prüfer |
|---|---|---|
| Den Haag | 20. November 2014 | Palais, Brieux |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 17 6964

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-11-2014

| Im Recherchenbericht angeführtes Patentdokument | | Datum der Veröffentlichung | Mitglied(er) der Patentfamilie | | Datum der Veröffentlichung |
|---|---|---|---|---|---|
| JP H06115640 | A | 26-04-1994 | JP | 2894109 B2 | 24-05-1999 |
| | | | JP | H06115640 A | 26-04-1994 |
| JP 2006168854 | A | 29-06-2006 | KEINE | | |
| DE 2716632 | A1 | 19-10-1978 | KEINE | | |
| US 2004197171 | A1 | 07-10-2004 | DE | 10136354 A1 | 27-02-2003 |
| | | | DE | 20211321 U1 | 16-01-2003 |
| | | | EP | 1409375 A1 | 21-04-2004 |
| | | | US | 2004197171 A1 | 07-10-2004 |
| | | | WO | 03010074 A1 | 06-02-2003 |
| | | | WO | 03011722 A1 | 13-02-2003 |
| EP 1471015 | B1 | 27-06-2007 | AT | 365692 T | 15-07-2007 |
| | | | DE | 20306390 U1 | 26-06-2003 |
| | | | EP | 1471015 A2 | 27-10-2004 |
| EP 0437894 | A1 | 24-07-1991 | DE | 69005094 D1 | 20-01-1994 |
| | | | EP | 0437894 A1 | 24-07-1991 |
| | | | IT | 1237950 B | 19-06-1993 |
| | | | US | 5149240 A | 22-09-1992 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1471015 B1